# EUROPEAN PATENT APPLICATION

(11) **EP 1 873 672 A2**
(43) Date of publication of application: **02.01.2008**
(21) Application number: 07012308.8
(22) Date of filing: 22.06.2007
(51) Int. Cl.: G06F 21/02

(54) **Memory access control apparatus and method, and communication apparatus**

(30) Priority: 26.06.2006 JP 2006174807
(71) Applicant: Sony Corporation, Minato-ku Tokyo 108-0075 (JP)
(72) Inventor: Muraoka, Jochiku, Tokyo, 108-0075 (JP)
(74) Representative: Müller - Hoffmann & Partner

(57) **Abstract**

A memory access control apparatus includes a scramble key storing unit for storing an input scramble key and a scramble unit for assigning a physical address to be actually accessed in a memory to an input logical address by using the stored scramble key to scramble the input logical address.

## Description

### CROSS REFERENCES TO RELATED APPLICATIONS

The present invention contains subject matter related to Japanese Patent Application JP 2006-174807 filed in the Japanese Patent Office on June 26, 2006, the entire contents of which are incorporated herein by reference.

### BACKGROUND OF THE INVENTION

### 1. Field of the Invention

The present invention relates to memory access control apparatuses and methods, and communication apparatuses, and, in particular, to a memory access control apparatus and method, and a communication apparatus in which security of data in a memory can easily be improved.

### 2. Description of the Related Art

There has been proposed a technology (see, for example, Japanese Unexamined Patent Application Publication (translation of PCT international application) No. 2003-500786) that makes it difficult to analyze and tamper with data stored in a memory by scrambling a logical address whose access is requested by a processor such as a CPU (central processing unit), and assigning, to the logical address, a physical address to be actually accessed in the memory.

### SUMMARY OF THE INVENTION

In recent years, techniques of intercepting and tampering with data have become more advanced. Accordingly, in addition to the technology disclosed in Japanese Unexamined Patent Application Publication (translation of PCT international application) No. 2003-500786, it is necessary to improve security of data stored in the memory.

The present invention has been made in view of the above-described circumstances. It is desirable to easily improve security of data stored in a memory.

A memory access control apparatus according to a first embodiment of the present invention includes scramble key storing means for storing an input scramble key, and scrambling means for assigning a physical address to be actually accessed in a memory to an input logical address by using the stored scramble key to scramble the input logical address.

The memory access control apparatus may further include random number generating means for generating a random number or pseudo-random number as the scramble key.

The random number generating unit may generate a Gold-sequence pseudo-random number as the above pseudo-random number.

When the generated random number or pseudo-random number is equal to a predetermined value, the random number generating means may generate a new random number or pseudo-random number.

A memory access control method according to a second embodiment of the present invention includes the steps of storing an input scramble key, and assigning a physical address to be actually accessed in a memory to an input logical address by using the stored scramble key to scramble the input logical address.

A communication apparatus according to a third embodiment of the present invention communicates with an apparatus having a noncontact integrated-circuit-card function. The communication apparatus includes scramble key storing means for storing an input scramble key, and scrambling means for assigning, by using the stored scramble key to scramble an input logical address, to the input logical address, a physical address to be actually accessed in a memory for storing data read from the apparatus having the noncontact integrated-circuit-card function.

In the first embodiment of the present invention, an input scramble key is stored, and, by using the stored scramble key to scramble an input logical address, a physical address to be actually accessed in a memory is assigned to the logical address.

In the second and third embodiments of the present invention, an input scramble key is stored, and, by using the stored scramble key to scramble an input logical address, a physical address to be actually accessed in a memory is assigned to the logical address.

According to the first to third embodiments of the present invention, analyzing and tampering with data stored in a memory can be made difficult. In addition, according to the first and second embodiments of the present invention, security of the data stored in the memory can easily be improved.

### BRIEF DESCRIPTION OF THE DRAWINGS

Fig. 1 is a block diagram showing a reader-writer according to an embodiment of the present invention;
Fig. 2 is a block diagram showing a functional configuration of the control module shown in Fig. 1;
Fig. 3 is a block diagram showing a functional configuration of a first example of the random number output unit shown in Fig. 2;
Fig. 4 is a detailed block diagram showing a functional configuration of the random number output unit shown in Fig. 2;
Fig. 5 is a flowchart illustrating a scramble key generating process that is executed by the reader-writer shown in Fig. 1;
Fig. 6 is a flowchart illustrating a memory access control process that is executed by the reader-writer shown in Fig. 1;
Fig. 7 is a block diagram showing a functional configuration of a second example of the random number output unit shown in Fig. 2; and
Fig. 8 is a flowchart illustrating a scramble key generating process that is executed by the reader-writer shown in Fig. 1 when the random number output unit shown in Fig. 7 is included.

### DESCRIPTION OF THE PREFERRED EMBODIMENTS

Before describing an embodiment of the present invention, the correspondence between the features of the claims and the specific elements disclosed in an embodiment of the present invention is discussed below. This description is intended to assure that an embodiment supporting the claimed invention is described in this specification. Thus, even if an element in the following embodiment is not described as relating to a certain feature of the present invention, that does not necessarily mean that the element does not relate to that feature of the claims. Conversely, even if an element is described herein as relating to a certain feature of the claims, that does not necessarily mean that the element does not relate to other features of the claims.

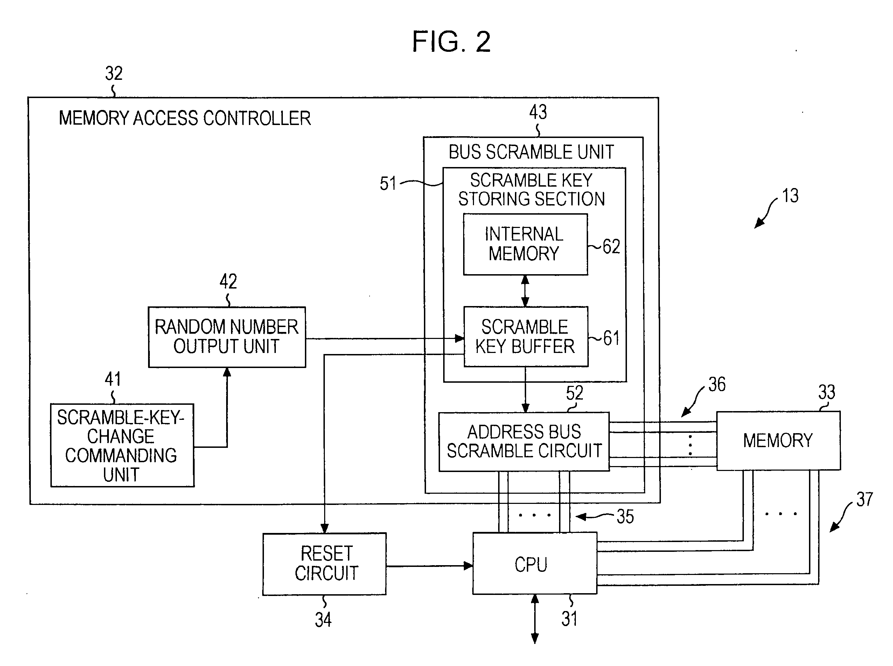

The memory access control apparatus (for example, the bus scramble unit 43 shown in Fig. 2) according to the first embodiment of the present invention first includes scramble key storing means (for example, the scramble key storing section 51 shown in Fig. 2) for storing an input scramble key, and scrambling means (for example, the address bus scramble circuit 52 shown in Fig. 2) for assigning a physical address to be actually accessed in a memory (for example, the memory 33 shown in Fig. 2) to an input logical address by using the stored scramble key to scramble the input logical address.

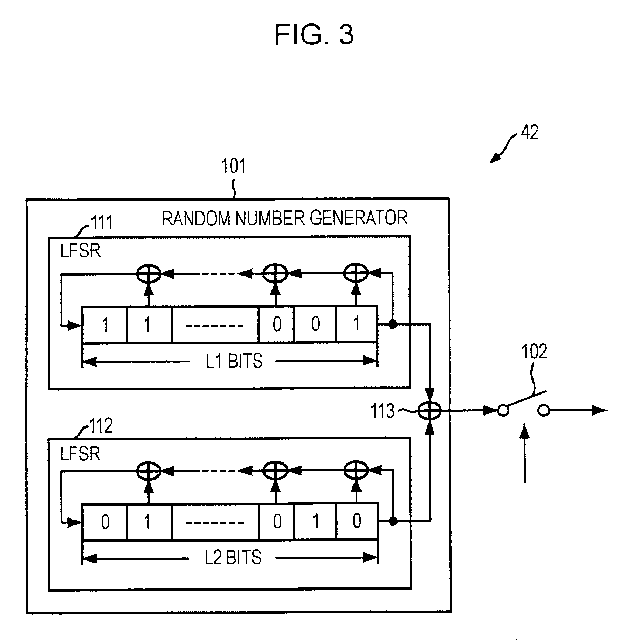

The memory access control apparatus according to the first embodiment of the present invention second includes random number generating means (for example, the random number generator 101 shown in Fig. 3) for generating a random number or pseudo-random number as the scramble key.

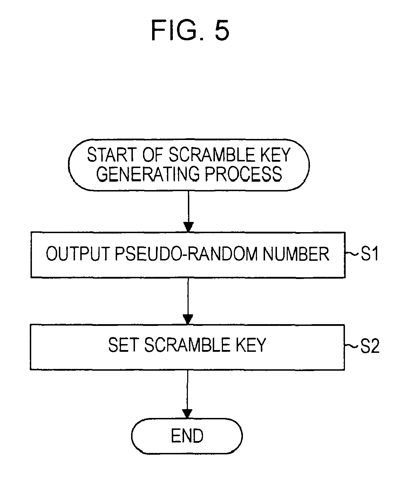

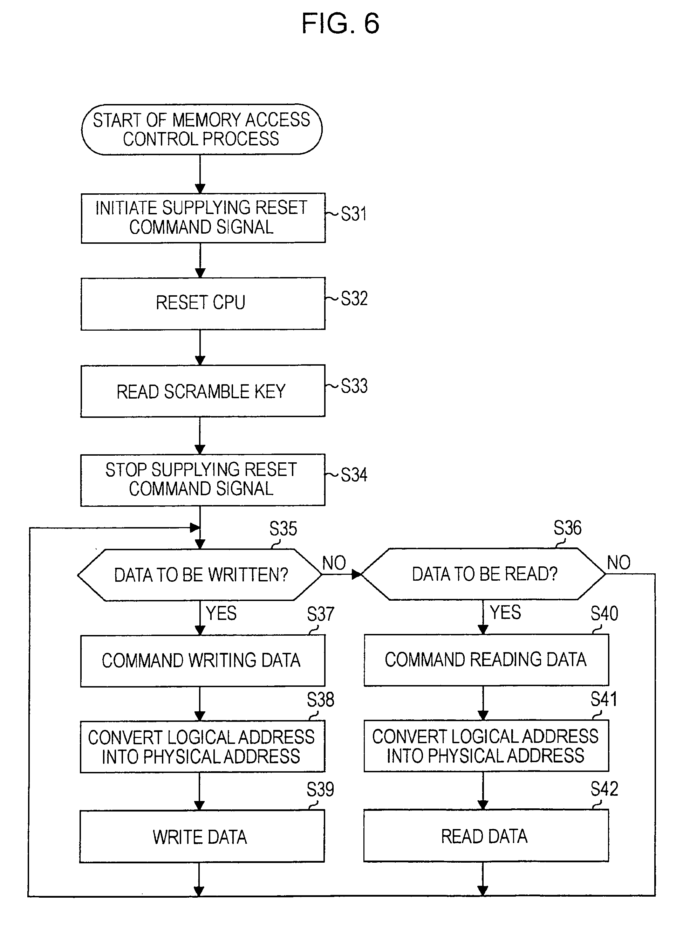

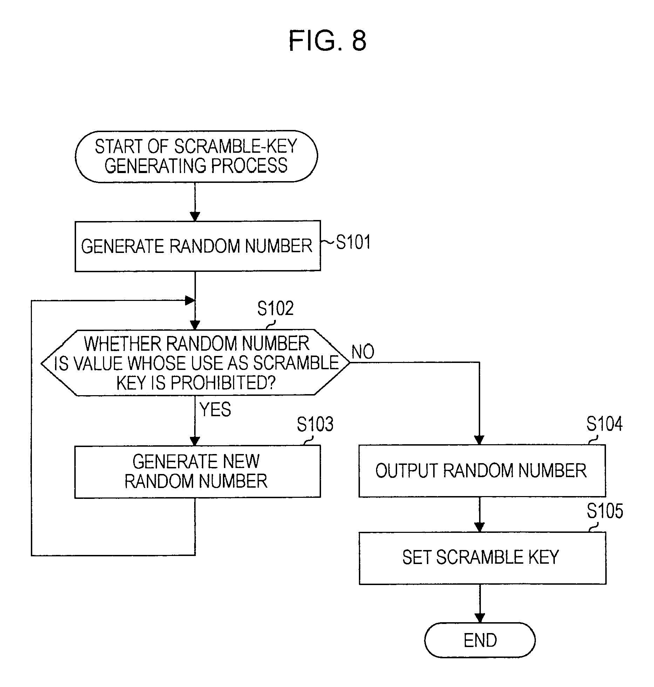

The memory access control method according to the second embodiment of the present invention includes the steps of storing an input scramble key (for example, step S2 shown in Fig. 5 or step S105 shown in Fig. 8), and assigning a physical address to be actually accessed in a memory to an input logical address by using the stored scramble key to scramble the input logical address (for example, step S38 or S41 shown in Fig. 6).

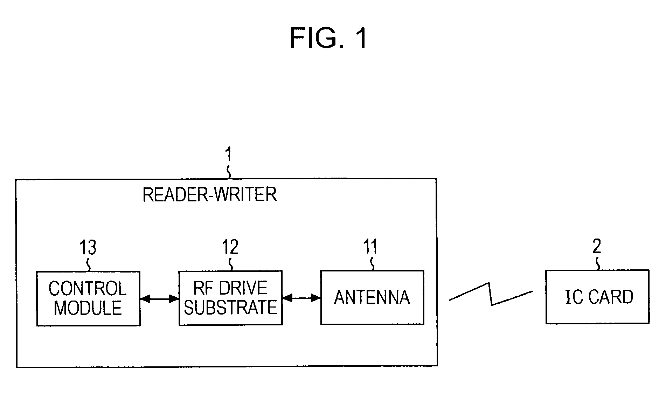

The communication apparatus (for example, the reader-writer 1 shown in Fig. 1) according to the third embodiment of the present invention communicates with an apparatus (for example, the IC card 2 shown in Fig. 1) having a noncontact integrated-circuit-card function. The communication apparatus according to the third embodiment of the present invention includes scramble key storing means (for example, the scramble key storing section 51 shown in Fig. 2) for storing an input scramble key, and scrambling means (for example, the address bus scramble circuit 52 shown in Fig. 2) for assigning, by using the stored scramble key to scramble an input logical address, to the input logical address, a physical address to be actually accessed in a memory (for example, the memory 33 shown in Fig. 2) for storing data read from the apparatus having the noncontact integrated-circuit-card function.

An embodiment of the present invention is described below with reference to the accompanying drawings.

Fig. 1 is a block diagram showing a reader-writer 1 according to an embodiment of the present invention. The reader-writer 1 according to the embodiment includes an antenna 11, an RF (radio frequency) drive substrate 12, and a control module 13.

The RF drive substrate 12 performs electromagnetic-induction proximity communication with an IC (integrated circuit) card 2 of a noncontact type by using a carrier having a single frequency via an antenna 11. As the frequency of the carrier used by the RF drive substrate 12, for example, an ISM (Industrial Scientific Medical) band of 13.56 MHz (megahertz), or the like, may be used. The proximity communication represents communication in which two apparatuses can communicate with each other when the distance between both apparatuses is within several tens of centimeters. The proximity communication includes a type of communication performed such that (housings of) two apparatuses touch each other.

The control module 13 executes a process for realizing a service using the IC card 2. The control module 13 writes and reads data for use in the service on the IC card 2 through the antenna 11 and the RF drive substrate 12, if necessary. In addition, the control module 13 can execute processes for types of services in parallel. Specifically, the reader-writer 1 alone can provide a plurality of services using the IC card 2 of the noncontact type, such as electronic money services, prepaid card services, and ticket card services for various types of transportation.

Fig. 2 is a block diagram showing a functional configuration of the control module 13 shown in Fig. 1. The control module 13 includes a CPU 31, a memory access controller 32, a memory 33, and a reset circuit 34. The memory access controller 32 includes a scramble-key-change commanding unit 41, a random number output unit 42, and a bus scramble unit 43. The bus scramble unit 43 includes a scramble key storing section 51 and an address bus scramble circuit 52. The scramble key storing section 51 includes a scramble key buffer 61 and an internal memory 62.

The CPU 31 and the address bus scramble circuit 52 are interconnected by an address bus 35 having a bus width of n bits. The address bus scramble circuit 52 and the memory 33 are interconnected by an address bus 36 having an n-bit bus width equal to that of the address bus 35. The CPU 31 and the memory 33 are interconnected by a data bus 37 having a bus width of m bits.

By executing a predetermined program, the CPU 31 executes the process for realizing the service using the IC card 2. In addition, the CPU 31 can execute programs corresponding to the services in parallel. In other words, the CPU 31 can execute processes for a plurality of services in parallel.

The CPU 31 writes and reads data for use in each service in the memory 33. When the CPU 31 writes the data in the memory 33, the CPU 31 uses the address bus 35 to supply the address bus scramble circuit 52 with a logical address signal that represents a logical address representing a logical data-writing location, and uses the data bus 37 to supply the memory 33 with a write signal which includes write data and which represents a data write command. When the CPU 31 reads the data from the memory 33, the CPU 31 uses the address bus 35 to supply the address bus scramble circuit 52 with a logical address signal that represents a logical address representing a logical data-reading location, and uses the data bus 37 to supply the memory 33 with a read signal representing a data read command.

The memory access controller 32 controls accessing of the memory 33 by the CPU 31.

Among components included in the memory access controller 32, the scramble-key-change commanding unit 41 includes, for example, a button and a switch. In the case of changing a scramble key stored in the scramble key storing section 51, for example, a user uses the scramble-key-change commanding unit 41 to input a scramble-key-change command.

When the scramble-key-change commanding unit 41 supplies the random number output unit 42 with a signal representing the scramble-key-change command, the random number output unit 42 generates a pseudo-random number formed by an n-bit string, and outputs the generated pseudo-random number as a scramble key to the scramble key buffer 61.

The bus scramble unit 43 performs processing for converting a logical address represented by the logical address supplied from the CPU 31 into a physical address to be actually accessed in the memory 33.

Among components included in the bus scramble unit 43, the pseudo-random number supplied from the random number output unit 42 is stored as a scramble key in the scramble key storing section 51. Specifically, the scramble key buffer 61 in the scramble key storing section 51 stores, as the scramble key, the pseudo-random number supplied from the random number output unit 42. In addition, the scramble key buffer 61 also supplies and stores the scramble key in the internal memory 62. The internal memory 62 is formed by a nonvolatile memory such as a flash memory or a RAM (random access memory) backed up by a battery or the like. The internal memory 62 continuously stores the scramble key, even if a power supply of the control module 13 is in an OFF state. In addition, when the power supply of the control module 13 is turned on from the OFF state, the scramble key buffer 61 reads and stores the scramble key stored in the internal memory 62. Until reading of the scramble key from the internal memory 62 is completed after the power supply of the control module 13 is turned on, the scramble key buffer 61 supplies a reset command signal to the reset circuit 34.

By using the scramble key stored in the scramble key buffer 61 to scramble the logical address represented by the logical address signal supplied from the CPU 31, the address bus scramble circuit 52 converts the logical address into a physical address to be actually accessed in the memory 33. In other words, by scrambling an input logical address, the address bus scramble circuit 52 assigns a physical address to the logical address. The address bus scramble circuit 52 supplies the memory 33 with a physical address signal representing the physical address obtained by the conversion.

The memory 33 is formed by, for example, one of nonvolatile memories such as a flash memory, an EEPROM (electrically erasable and programmable read only memory), an HDD (hard disk drive), an MRAM (magnetoresistive random access memory), an FeRAM (ferroelectric random access memory), and an OUM (ovonic unified memory). When being supplied with a write signal from the CPU 31, the memory 33 writes data included in the write signal at a physical address in the memory 33 which is represented by the physical address signal supplied from the address bus scramble circuit 52. In addition, when being supplied with a read signal from the CPU 31, the memory 33 reads data at a physical address in the memory 33 which is represented by the physical address signal supplied from the address bus scramble circuit 52, and supplies the read data to the CPU 31 through the data bus 37.

While the reset command signal is being supplied from the scramble key buffer 61 to the reset circuit 34, the reset circuit 34 initializes the state of the CPU 31 by supplying a reset signal to the CPU 31.

Fig. 3 is a block diagram showing a functional configuration of a first example of the random number output unit 42. The random number output unit 42 includes a random number generator 101 and a switch 102.

The random number generator 101 includes an LFSR (linear feedback shift register) random number output unit 111 including a shift register having L1 bits, an LFSR random number output unit 112 including a shift register having L2 bits, and an EXOR (exclusive OR) circuit 113.

The LFSR random number output units 111 and 112 are based on the known LFSR principle in which an exclusive logical sum having a value represented by predetermined bits in a shift register is input as a feedback value to the shift register. The random number generator 101 generates a Gold-sequence random number by using the EXOR circuit 113 to obtain, for each bit, an exclusive logical sum of two different M-sequence pseudo-random numbers generated by the LFSR random generating units 111 and 112. The number of LFSR random number output units included in the random number generator 101 is not limited to two, but may be three or greater.

When an input signal representing a scramble-key-change command is received from the scramble-key-change commanding unit 41, the switch 102 is turned on, whereby the bit string representing the Gold-sequence random number generated by the random number generator 101 is output to the scramble key buffer 61 through the switch 102.

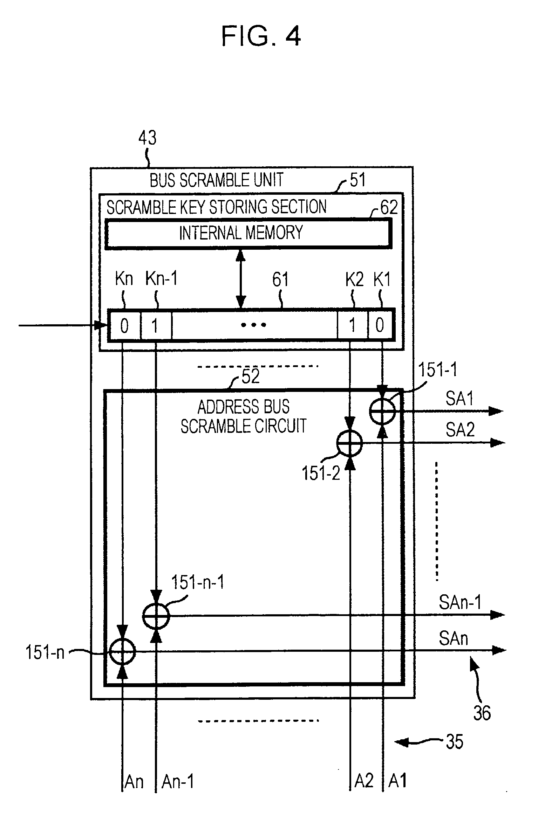

Fig. 4 is a detailed block diagram showing a functional configuration of the bus scramble unit 43.

The scramble key buffer 61 includes a serial-input and parallel-output shift register having n bits. In the scramble key buffer 61, the pseudo-random number supplied as a serial signal from the random number output unit 42 is stored as a scramble key.

The address bus scramble circuit 52 converts a logical address into an n-bit physical address having bits SA1 to SAn by using EXOR circuits 151-1 to 151-n to obtain an exclusive logical sum between each bit of the n-bit logical address which has bits A1 to An and which is represented by the logical address signal supplied from the CPU 31 through the address bus 35, and each bit of an n-bit scramble key which has bits K1 to Kn and which is stored in the scramble key buffer 61. The address bus scramble circuit 52 supplies the memory 33 with a physical address signal representing the physical address obtained by the conversion.

Processing by the reader-writer 1 is described below with reference to Figs. 5 and 6.

First, a scramble key generating process executed by the reader-writer 1 is described below with reference to the flowchart shown in Fig. 5. The scramble key generating process is started, for example, in a case in which, when a power supply of the reader-writer 1 is on, the user uses the scramble-key-change commanding unit 41 to input a scramble-key-change command to change the scramble key.

In step S1, the random number output unit 42 outputs a pseudo-random number. Specifically, the scramble-key-change commanding unit 41 turns on the switch 102 by supplying the switch 102 with a signal representing the scramble-key-change command. The random number generator 101 continuously generates pseudo-random numbers while the power supply of the reader-writer 1 is being on. Turning on of the switch 102 initiates output of the pseudo-random number from the random number generator 101 to the scramble key buffer 61 through the switch 102. When the pseudo-random number is output for n bits from the random number generator 101, the switch 102 is turned off.

In step S2, the bus scramble unit 43 sets the scramble key. After that, the scramble key generating process finishes. Specifically, in the scramble key buffer 61, the pseudo-random number, formed by an n-bit string and supplied from the random number output unit 42, is stored as a scramble key in an internal register. The scramble key buffer 61 supplies and stores the scramble key in the internal memory 62. In other words, the scramble key is backed up by the internal memory 62.

This makes it possible to set, for each control module 13 when the number of reader-writers 1 is plural, a scramble key which has a different value and whose prediction is difficult. The scramble key generating process is performed, for example, before the reader-writer 1 is shipped from a factory.

Next, a memory access control process that is executed by the reader-writer 1 is described below with reference to the flowchart shown in Fig. 6. The memory access control process is started, for example, when the power supply of the reader-writer 1 is turned on.

In step S31, the power supply of the reader-writer 1 is turned on and the power supply of the control module 13 is turned on, whereby the scramble key buffer 61 initiates supplying a reset command signal to the reset circuit 34.

In step S32, the reset circuit 34 resets the CPU 31 by initiating supplying the reset signal to the CPU 31. This initializes the state of the CPU 31.

In step S33, the scramble key buffer 61 reads the scramble key stored in the internal memory 62. The scramble key buffer 61 stores the read scramble key in the internal register.

In step S34, the scramble key buffer 61 stops supplying the reset command signal to the reset circuit 34. Accordingly, the reset circuit 34 stops supplying the reset signal to the CPU 31, and the CPU 31 initiates program execution.

In step S35, the CPU 31 determines whether to write data. If, in the program being executed, data writing is not performed in the next step, the CPU 31 determines not to write the data, and the process proceeds to step S36.

In step S36, the CPU 31 determines whether to read data. If, in the program being executed, data reading is not performed in the next step, the CPU 31 determines not to read the data, and the process returns to step S35.

After that, until the CPU 31 determines to write the data in step S35 or determines to read the data in step S36, steps S35 and S36 are repeatedly executed.

If, in the program being executed, the data writing is performed in the next step, in step S35, the CPU 31 determines to write the data, and the process proceeds to step S37.

In step S37, the CPU 31 commands writing the data. Specifically, the CPU 31 uses the address bus 35 to supply the address bus scramble circuit 52 with a logical address signal that represents a logical address representing a logical data-writing location. In addition, the CPU 31 uses the data bus 37 to supply the memory 33 with a write signal which includes write data and which represents a data write command.

In step S38, the address bus scramble circuit 52 converts the logical address into the physical address. Specifically, the address bus scramble circuit 52 converts the logical address into a physical address by obtaining an exclusive logical sum between each bit of the logical address represented by the logical address signal and each bit of the scramble key stored in the scramble key buffer 61, and scrambling the logical address. The address bus scramble circuit 52 uses the address bus 36 to supply the memory 33 with the physical address signal representing the physical address obtained by the conversion.

In step S39, the data is written in the memory 33. Specifically, the memory 33 writes the data included in the write signal supplied from the CPU 31 at a physical address in the memory 33 which is represented by the physical address signal. This actually writes the data in the memory 33 so as to be allocated at random, even if the memory 33 is commanded by the CPU 31 to write the data at consecutive logical addresses. Thus, it is difficult to analyze and tamper with the content of the data stored in the memory 33.

After that, the process returns to step S35, and step S35 and the subsequent steps are executed.

If, in the program being executed, the data reading is performed in the next step, in step S36, the CPU 31 determines to read the data, and the process proceeds to step S40.

In step S40, the CPU 31 commands reading data. Specifically, the CPU 31 uses the address bus 35 to supply the address bus scramble circuit 52 with a logical address signal representing a logical address representing a logical data-reading location. In addition, the CPU 31 uses the data bus 37 to supply the memory 33 with the read signal representing a data reading command.

Similarly to step S38, in step S41, the logical address is converted into a physical address, and a physical address signal representing the physical address obtained by the conversion is supplied from the address bus scramble circuit 52 to the memory 33 through the address bus 36.

In step S42, the memory 33 reads the data. Specifically, the memory 33 reads the data stored at the physical address represented by the physical address signal, and uses the data bus 37 to supply the read data to the CPU 31.

After that, the process returns to step S35, and step S35 and the subsequent steps are executed.

As described above, a different scramble key for each control module 13 when the number of reader-writers 1 is plural can easily be set. Even if a scramble key set for one control module 13 is analyzed, it is difficult to use the scramble key to analyze and tamper with the data stored in the memory 33 of a different control module 13. Therefore, damage based on distribution of and tampering with data can be minimized.

In addition, regarding a method for generating the pseudo-random number and a method for scrambling the address, the related art may be used without being modified, and it is necessary to provide a new complex circuit. Accordingly, no effort of the user is necessary except for inputting a scramble-key-change command. Thus, security of data stored in the memory 33 can easily be improved.

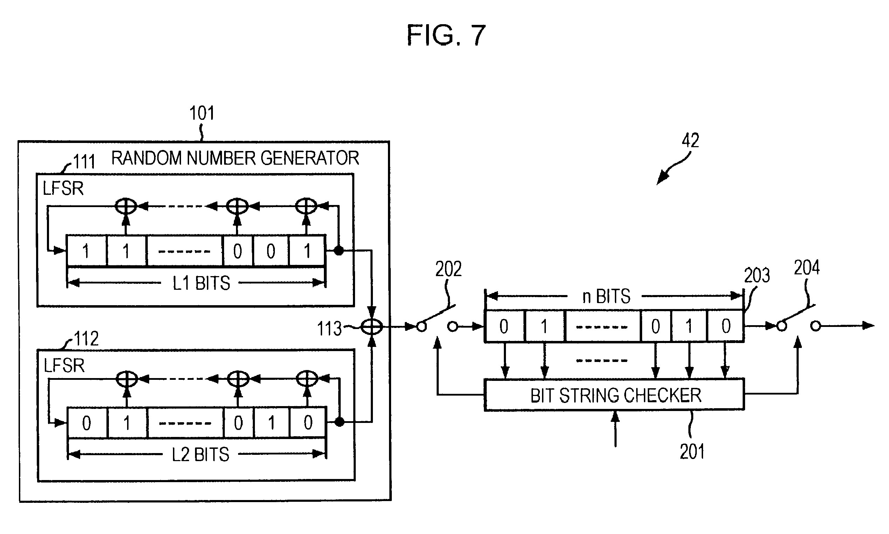

Next, a second example of the random number output unit 42 is described below with reference to Figs. 7 and 8.

Fig. 7 is a block diagram showing a functional configuration of the second example of the random number output unit 42. The random number output unit 42 shown in Fig. 7 includes the random number generator 101, a bit string checker 201, a switch 202, a random number register 203 formed by a shift register having n bits, and a switch 204. In Fig. 7, portions corresponding to those shown in Fig. 3 are denoted by identical reference numerals, and portions that are identical in processing are not described since their descriptions are repetitions.

The bit string checker 201 acquires a signal that represents the scramble-key-change command from the scramble-key-change commanding unit 41. When the scramble-key-change commanding unit 41 supplies the bit string checker 201 with the scramble key command, the bit string checker 201 turns on the switch 202. Accordingly, the bit string that represents the Gold-sequence pseudo-random number generated by the random number generator 101 is supplied from the random number generator 101 and is stored in the random number register 203 through the switch 202.

In addition, the bit string checker 201 checks whether the pseudo-random number stored in the random number register 203 is equal to a predetermined value whose use as a scramble key is prohibited. If the pseudo-random number stored in the random number register 203 is equal to the predetermined value whose use as the scramble key is prohibited, the bit string checker 201 turns on the switch 202 to output the pseudo-random number, which has a predetermined number of bits, from the random number generator 101 to the random number register 203, whereby the value of the pseudo-random number stored in the random number register 203 is changed. If the pseudo-random number stored in the random number register 203 is not equal to the predetermined value whose use as the scramble key is prohibited, the bit string checker 201 turns on the switch 204. This allows the pseudo-random number (formed by the n-bit string) stored in the random number register 203 to be output to the scramble key buffer 61 through the switch 204. In other words, if the pseudo-random number generated by the random number generator 101 is equal to a predetermined value whose use as the scramble key is prohibited, the bit string checker 201 controls the random number generator 101 so that the random number generator 101 generates a new pseudo-random number and outputs the generated pseudo-random number, which differs from the value whose use as the scramble key is prohibited, to the scramble key buffer 61.

Next, a scramble key generating process that is executed by the reader-writer 1 instead of the scramble key generating process shown in Fig. 5 when the reader-writer 1 includes the random number output unit 42 shown in Fig. 7 is described below with reference to the flowchart shown in Fig. 8. The scramble key generating process shown in Fig. 8 is started, for example, in a case in which, when the power supply of the reader-writer 1 is on, the user uses the scramble-key-change commanding unit 41 to input the scramble-key-change command.

In step S101, the random number output unit 42 generates a pseudo-random number. Specifically, the scramble-key-change commanding unit 41 supplies the bit string checker 201 with a signal that represents a scramble-key-change command. The bit string checker 201 turns on the switch 202. The random number generator 101 continuously generates pseudo-random numbers while the power supply of the reader-writer 1 is being on. Turning of the switch 202 initiates output of the pseudo-random number from the random number generator 101 to the random number register 203 through the switch 202. When the pseudo-random number is output for n bits by the random number generator 101, the bit string checker 201 turns off the switch 202.

In step S102, the bit string checker 201 determines whether the pseudo-random number is a value whose use as a scramble key is prohibited. Specifically, the bit string checker 201 compares the pseudo-random number stored in the random number register 203 with the value whose use as the scramble key is prohibited. For example, the user sets beforehand, as values whose use as scramble keys is prohibited, values that can easily be estimated compared with other values, such as bit strings having consecutive identical digits such as 000...000 and 111...111, and bit strings in which different groups of digits alternately repeat, such as 0101...0101, 0101...010, 1010...1010, and 1010...101. If the bit string checker 201 determines that the pseudo-random number stored in the random number register 203 is one of the values whose use as scramble keys is prohibited, the process proceeds to step S103.

In step S103, the bit string checker 201 generates a new pseudo-random number. Specifically, by turning on the switch 202, the bit string checker 201 controls the random number generator 101 to output, to the random number register 203, a pseudo-random number which has a predetermined number of bits. The random number register 203 shifts the stored bit string upward by the number of bits of the new pseudo-random number input to the random number register 203, and adds the new pseudo-random number to the end of the stored bit string. In other words, the new pseudo-random number generated by the random number generator 101 is stored in the random number register 203.

After that, the process returns to step S102, and, until it is determined in step S102 that the pseudo-random number is not the value whose use as the scramble key is prohibited, steps S102 and S103 are repeatedly executed.

If, in step S102, it is determined that the pseudo-random number is not the value whose use as the scramble key is prohibited, the process proceeds to step S104.

In step S104, the random number output unit 42 outputs the pseudo-random number. Specifically, the bit string checker 201 turns on the switch 204. This allows the pseudo-random number stored in the random number register 203 to be output to the scramble key buffer 61 through the switch 204.

Similarly to step S2 in Fig. 5, in step S105, the scramble key is set, and the scramble key generating process shown in Fig. 8 finishes.

As described above, a value that can easily be estimated is prevented from being set as the scramble key. Thus, analyzing and tampering with the data stored in the memory 33 are made difficult, thus improving security of the data stored in the memory 33. In addition, for example, by changing the scramble key with timing of exchanging or initializing the memory 33, analysis of the scramble key can be made more difficult.

The foregoing description describes a case in which a Gold-sequence pseudo-random number is used as a scramble key. However, a random number or pseudo-random number for use as a scramble key is not limited to the above-described embodiment, but, for example, an M-sequence pseudo-random number obtained in the case of using only one LFSR may be used and a physical pseudo-random number using thermal noise may be used.

In addition, the method for scrambling the address is not limited to the above-described example. However, another method that uses a scramble key set on the basis of a random number or pseudo-random number may be used.

The foregoing description exemplifies the IC card 2 as a party that communicates with the reader-writer 1. Obviously, the reader-writer 1 can communicate with noncontact-IC-card-function apparatuses such as cellular phones, PDAs (personal digital assistants), timepieces, and computers having noncontact IC card functions.

In addition, the memory access controller 32 shown in Fig. 2 can be applied to a memory-data reading/writing apparatus different from the reader-writer 1.

Furthermore, in addition to the above-described prohibition of the random number output unit 42 shown in Fig. 7 from outputting the value that can easily be estimated as the scramble key, arbitrary values whose output is prohibited can be set depending on purposes.

In addition, although the foregoing description describes a case in which the memory 33 shown in Fig. 2 is a nonvolatile memory, it is obviously possible that the random number output unit 42 is used for a volatile memory.

It should be understood by those skilled in the art that various modifications, combinations, sub-combinations and alterations may occur depending on design requirements and other factors insofar as they are within the scope of the appended claims or the equivalents thereof.

## Claims

1. A memory access control apparatus comprising:
scramble key storing means for storing an input scramble key; and
scrambling means for assigning a physical address to be actually accessed in a memory to an input logical address by using the stored scramble key to scramble the input logical address.

2. The memory access control apparatus according to Claim 1, further comprising random number generating means for generating a random number or pseudo-random number as the scramble key.

3. The memory access control apparatus according to Claim 2, wherein the random number generating means generates a Gold-sequence pseudo-random number as the pseudo-random number.

4. The memory access control apparatus according to Claim 2, wherein, when the generated random number or pseudo-random number is equal to a predetermined value, the random number generating means generates a new random number or pseudo-random number.

5. A memory access control method comprising the steps of:
storing an input scramble key; and
assigning a physical address to be actually accessed in a memory to an input logical address by using the stored scramble key to scramble the input logical address.

6. A communication apparatus for communicating with an apparatus having a noncontact integrated-circuit-card function, the communication apparatus comprising:
scramble key storing means for storing an input scramble key; and
scrambling means for assigning, by using the stored scramble key to scramble an input logical address, to the input logical address, a physical address to be actually accessed in a memory for storing data read from the apparatus having the noncontact integrated-circuit-card function.

7. A memory access control apparatus comprising:
a scramble key storing unit storing an input scramble key; and
a scrambling unit assigning a physical address to be actually accessed in a memory to an input logical address by using the stored scramble key to scramble the input logical address.

8. A communication apparatus for communicating with an apparatus having a noncontact integrated-circuit-card function, the communication apparatus comprising:
a scramble key storing unit storing an input scramble key; and
a scrambling unit assigning, by using the stored scramble key to scramble an input logical address, to the input logical address, a physical address to be actually accessed in a memory for storing data read from the apparatus having the noncontact integrated-circuit-card function.
